# EUROPEAN PATENT SPECIFICATION

(11) **EP 1 904 222 B1**
(45) Date of publication and mention of the grant of the patent: **22.12.2010**
(21) Application number: 06754642.4
(22) Date of filing: 30.06.2006
(51) Int. Cl.: B01J 19/00, C01B 17/88, C01B 17/02, C01B 17/80, C01B 17/69, C01B 17/70, C01B 17/76

(54) **PROCESS AND PLANT FOR THE CONDENSATION OF SULFUR TRIOXIDE FROM HOT STARTING GASES**
VERFAHREN UND ANLAGE ZUR KONDENSATION VON SCHWEFELTRIOXID AUS HEISSEN AUSGANGSGASEN
PROCEDE ET INSTALLATION POUR LA CONDENSATION DE TRIOXYDE DE SOUFRE A PARTIR D'UN GAZ DE DEPART AYANT UNE TEMPERATURE ELEVEE

(30) Priority: 14.07.2005 DE 102005032797
(43) Date of publication of application: 02.04.2008
(73) Proprietor: Outotec Oyj, 02200 Espoo (FI)
(72) Inventor: RAUSER, Wolf-Christoph, Wembley Downs 6019 WA (AU); WALLER, Michael, 5272 Gansingen (CH); SEITZ, Ekkehart, 64342 Seeheim-Jugenheim (DE)
(74) Representative: KEIL & SCHAAFHAUSEN Patentanwälte
(86) International application number: PCT/EP2006/006402
(87) International publication number: WO 2007/006435

(56) References cited:
- GB-A- 2 051 766
- US-A- 3 142 536
- US-A- 4 643 887
- US-A- 4 842 835
- US-A- 4 910 011

## Description

The present invention relates to a process and a plant for the condensation of sulfur trioxide from hot starting gases containing sulfur trioxide. Such processes are usually employed for separating and recovering sulfur trioxide from gases containing sulfur trioxide.

On a technical scale, sulfur trioxide generally is obtained from oleum, i.e. concentrated sulfuric acid with sulfur trioxide dissolved therein. For this purpose, the sulfur trioxide dissolved in the oleum is first expelled from the oleum in an evaporator, before the sulfur trioxide is separated from the produced gas mixture rich in sulfur trioxide by condensation in a condensation device. For producing the starting gases rich in sulfur trioxide, oleum with a concentration of free sulfur trioxide between 28 and 64 wt-% is conventionally leaned to oleum with a concentration of free SO₃ between 5 and 30 wt-%. As heat transfer medium for the evaporator, there is usually employed process gas from a sulfuric acid plant or heating air from a heating-air generator. Due to their lower oleum inventory, the evaporators frequently are designed as falling-film apparatuses, in which because of their continuous operation as compared to other types of evaporator fewer liquid particles are entrained by the gas stream, so that the gas rich in sulfur trioxide contains fewer impurities.

For the condensation of the sulfur trioxide from the hot starting gases rich in sulfur trioxide, there is usually employed a condensation device in the form of a shell-and-tube or falling-film heat exchanger operated with water as cooling medium, in which the starting gas is first cooled to saturated-steam temperature, and subsequently the SO₃ is condensed out of the cooled starting gas. However, the use of water as cooling medium in the condensation device involves some safety risks, as in the case of damages to the coolant circuit water can be mixed with the sulfur trioxide and hence a strongly exothermal reaction can occur. Apart from this, the dual function of the condensation device, i.e. cooling of the hot starting gas rich in SO₃ and subsequent condensation of sulfur trioxide from the cooled starting gas, allows no optimum design of the condensation device.

U.S. patent 4,643,887 discloses a process for condensing SO₃ from hot gases comprising the use of a heat exchanger and a condenser. The converter passes through the heat exchanger to preheat the incoming gas mixture and is then taken to the condenser which ensures further cooling to a temperature between 35 to 45°C at which a substantial portion of the SO₃ condenses out of the gas mixture.

U.S. patent 4,910,011 is directed to a process for cleaning gases. The cleaning is effected by adding H₂O to sulphur trioxide containing gases to condense sulfuric acid (H₂SO₄). This sulfuric acid is the product of the process. After SO₃ has been substantially removed from the flue gas the latter will flow at a temperature of 100°C to a scrubber.

According to U.S. patent 4,842,835 the gas is supplied to an air-preheating condenser, in which the gases are cooled to about 15°C and about 30% of the SO₃ contained in the flue gas are condensed. The gas then flows to the condensing tower, which comprises a cocurrent-flow venturi provided with sprayers. In the condensing tower, about 70% of the SO₃ contained in the flew gas are condensed at about 92°C. The flue gas from which SO₃ has been substantially removed is fed through the fine scrubber 18 and enters the latter at a temperature of about 92°C.

Document GB 2051766 A discloses a process for recovering sulphur trioxide in liquid form from a gas containing sulfur trioxide by passing the gas through a heat exchanger and a subsequent condenser. The cooling in the condenser is effected by a pure sulfur dioxide refrigerant at a temperature of -4°C

Therefore, it is the object underlying the present invention to provide a process for the condensation of gaseous sulfur trioxide from a hot starting gas containing sulfur trioxide, which is sufficiently safe even in the case of damages in the coolant circuit, supplies liquid sulfur trioxide of high purity, which is in particular largely free of water and nitrosyl sulfuric acid, and can be operated optimally in terms of energy efficiency.

In accordance with the invention, this object is solved by a process according to claim 1.

Due to the fact that at least one heat exchanger for cooling the hot starting gas is provided upstream of the condensation device, in which both the cooling of the hot gases containing SO₃ and the condensation of the sulfur trioxide is effected in accordance with the known processes, the energy demand of the total process can be decreased significantly, as the at least two parts of the plant can each be designed optimally for their respective purpose. In the heat exchanger, all components with a dew point between 50 and 120°C are removed, so that by means of the process of the invention liquid sulfur trioxide of high purity is obtained, which is at least substantially free of water and other impurities, such as nitrogen oxides. In addition, by omitting water as cooling medium, a safe procedure is achieved, as even in the case of damage to the coolant circuit no significantly exothermal reaction can occur between the cooling medium and the sulfur trioxide. Furthermore, the use of gas as cooling medium in the heat exchanger provided upstream of the condensation device provides for utilizing the cooling gas withdrawn from the heat exchanger for heating purposes in other parts of the plant used in the process or in other plants, such as in a conventional sulfuric acid plant. On the whole, the process in accordance with the invention thus provides for the safe and inexpensive production of liquid sulfur trioxide of high quality.

In principle, the process of the invention can be used for the condensation of sulfur trioxide from all hot gases containing sulfur trioxide, independent of their SO₃ concentration and of the kind and quantity of possible impurities. Particularly good results are obtained, however, when a gas mixture produced by heating oleum with a content of dissolved sulfur trioxide of 28 to 64 wt-% in an evaporator is used as starting gas. In this case it turned out to be expedient to dispose the condensation plant downstream of a sulfuric acid plant.

In accordance with a development of the invention it is proposed to connect two heat exchangers in series for cooling the starting gas before introducing the same into the condensation device. In this way, the process can easily be controlled such that in the first heat exchanger impurities in the starting gas, in particular those with a dew point between 50 and 120°C, are removed particularly reliably by condensation, and in the second heat exchanger the gas rich in sulfur trioxide is adjusted to an optimum temperature for the final condensation to obtain liquid sulfur trioxide. Thus, liquid sulfur trioxide of particularly high quality is obtained.

In accordance with another particular embodiment of the invention it is provided to use a gas chemically inert to sulfur trioxide, preferably air, as cooling medium both in the first and in the second heat exchanger. As a result, undesired reactions between the starting gas and the cooling medium, which can damage the coolant device, are reliably avoided on the one hand, and on the other hand the heated coolant gases can be used as heating gas in other parts of the plant, and the energy demand of the process can thus be decreased.
A particularly effective procedure is obtained when the first heat exchanger is operated countercurrently and the cooling medium has an inlet temperature of 25 to 35°C.

Condensate obtained in the first heat exchanger when cooling the starting gas, which in particular includes compounds with a dew point between 50 and 120°C, is preferably recirculated to the oleum evaporator, in order to expel sulfur trioxide contained in the condensate and increase the total yield of the process.

In accordance with a development of the invention it is proposed to cool the starting gas in the first heat exchanger to a temperature between 50 and 70°C and in the second heat exchanger to a temperature between 40 and 45°C.

Preferably, the condensate possibly obtained in the second heat exchanger, in dependence on its sulfur trioxide concentration, which can be adjusted by the procedure, is either recirculated to the evaporator for again expelling the sulfur trioxide contained in the condensate or is introduced into the condensation device.

In accordance with another particular embodiment of the present invention it is proposed to use a heat transfer oil chemically inert to SO₃ as cooling medium in the condensation device. Due to their high thermal stability and their higher thermal capacity as compared to gases, heat transfer oils are excellently suited for cooling the gas to an extent sufficient for the condensation of sulfur trioxide, even with a high volume flow rate of the gas passed through the condensation device. As these heat transfer oils are chemically inert to SO₃ as compared to water, a high process safety is ensured even in the case of damages inside the coolant circuit.

In accordance with a development of the invention it is proposed to use a heat transfer oil with a viscosity as measured at 30°C between 0.1 and 100 mPa·s, preferably between 0.5 and 20 mPa·s, and particularly preferably between 1 and 1.2 mPa·s, as cooling medium in the condensation device.

Particularly good results are obtained when a heat transfer oil based on silicone oils is used as cooling medium in the condensation device.

In accordance with the present invention, heat transfer oils based on silicone oils, in particular those based on polydimethyl siloxanes, as they are sold for instance by the firm Dow Chemicals under the trade names SYLTHERM^{®} XLT, SYLTHERM^{®} 800 and SYLTHERM^{®} HF, likewise turned out to be useful for this purpose.

Quite particularly preferably, SYLTHERM^{®} XLT is used as cooling medium in the condensation device.

When using other heat transfer oils on a commercial scale, laboratory experiments must be made to determine their reactivity with liquid SO₃. In accordance with the invention, the heat transfer oils should have a low reactivity with liquid

SO₃, so that no exothermal reaction can occur. This can be determined by means of a measurement. Silicone oils exhibit no quick exothermal reaction with liquid SO₃.

As condensation device for the process of the invention, all apparatuses known to those skilled in the art for this purpose can be used in principle, in particular shell-and-tube heat exchangers, plate-type heat exchangers and falling-film heat exchangers.

In accordance with a development of the invention, it is proposed to operate the condensation device cocurrently, the cooling medium preferably having a temperature between 25 and 35°C in this case.

Alternatively, the condensation device can also be operated countercurrently, the cooling medium preferably having a temperature between 30 and 35°C in this case.

In accordance with another particular embodiment of the present invention, the cooling medium of the condensation device is guided in a closed circuit and upon discharge from the condensation device is first recooled in a liquid-liquid heat exchanger, before it is again introduced into the condensation device.

Another subject-matter of the present invention is a plant for the condensation of sulfur trioxide from a hot starting gas containing sulfur trioxide for performing the process of the invention, comprising the features of claim 15.

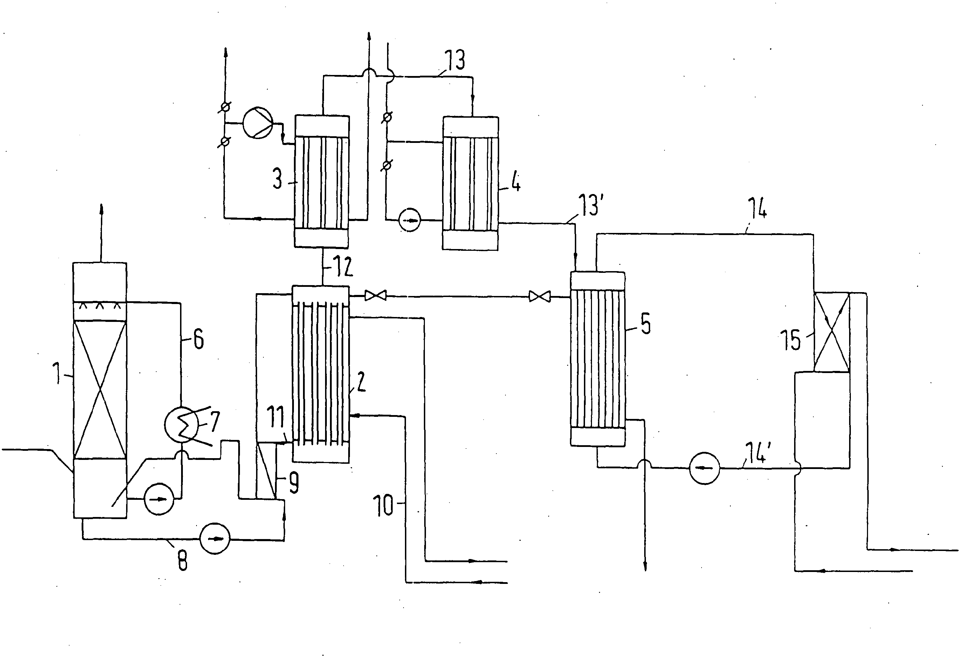

The invention will subsequently be explained in detail with reference to embodiments and the drawing.

The plant as shown in the only Figure for the condensation of sulfur trioxide from a hot starting gas containing sulfur trioxide, which is produced by expelling sulfur trioxide from oleum, comprises an oleum tower 1 as storage tank for oleum, an oleum evaporator 2, two heat exchangers 3, 4, and a condensation device 5.

For producing the starting gas, oleum is first withdrawn from the oleum tower 1, in which oleum with a content of free sulfur trioxide between 28 and 64 wt-% is circulated for cooling purposes via conduit 6 and the oleum circuit cooler 7, and is then supplied via conduit 8 to an oleum preheater 9 for preheating purposes, before the preheated oleum is introduced into the oleum evaporator 2 supplied with cooling gas via conduit 10, where it is further heated, until a large part of the sulfur trioxide dissolved in the oleum has been expelled from the oleum. While the leaned oleum with a content of free sulfur trioxide between 5 and 30 wt-% is recirculated to the oleum preheater 9 via conduit 11, the expelled starting gas containing sulfur trioxide with a temperature between 100 and 180°C is introduced into the first heat exchanger 3 via the gas conduit 12, in which heat exchanger the starting gas containing sulfur trioxide is countercurrently cooled down to 50 to 70°C by means of air, which at the inlet of the heat exchanger 3 has a temperature between 25 and 35°C. Condensate obtained in the first heat exchanger 3 is recirculated via a conduit (not shown) to the oleum evaporator 2, whereas the heated cooling air is discharged from the first heat exchanger 3 and utilized for heating purposes. Via the gas supply conduit 13, the precooled gas rich in sulfur trioxide is introduced into the second heat exchanger 4, where it is further cooled to 40 to 45°C by using air as cooling medium, before it is introduced into the condensation device 5 via the gas supply conduit 13'. Condensate obtained in the second heat exchanger 4 can selectively be supplied to the oleum evaporator 2 or to the condensation device 5.

In the condensation device 5, which preferably constitutes a shell-and-tube heat exchanger or a plate-type heat exchanger, the SO₃ is condensed out of the gas by a suitable cooling medium, preferably by a heat transfer oii chemically inert to sulfur trioxide. The cooling medium is circulated via the conduits 14, 14' and the thermal recooler 15, which for instance constitutes a spiral heat exchanger or a plate-type heat exchanger, in which the cooling medium is recooled to a temperature desired for operating the condensation device 5 by using cooling water normally present in the plant. If the condensation device 5 is operated cocurrently, the cooling medium preferably has a temperature between 25 and 30°C at the inlet of the condensation device 5, in the case of a countercurrent operation, however, preferably a temperature between 30 and 35°C.

The liquid sulfur trioxide condensed in the condensation device 5 can be discharged, for instance by gravity, to a storage tank (not shown) via corresponding conduits which constitute double-walled conduits and are connected to the high-temperature end of the cooling circuit.

### Example

A condensation plant as shown in the Figure, which is provided downstream of a conventional sulfuric acid plant with a capacity of 108 tons per day, was operated continuously.

In the oleum evaporator 2, oleum was heated to a temperature of about 120°C for expelling the sulfur trioxide dissolved therein, and the produced starting gas rich in sulfur trioxide was supplied to the first heat exchanger 3 with a temperature of about 135°C and cooled down therein to about 60°C. In the second heat exchanger 4, the gas then was cooled to about 40°C, before it was supplied to the condensation device 5, which was operated with SYLTHERM^{®} XLT as cooling medium, a heat transfer oil based on silicone oil commercially available from Dow Chemicals, and was condensed.

There were obtained 18 tons of condensed sulfur trioxide per day.

**List of Reference Numerals:**
- 1: oleum tower
- 2: oleum evaporator
- 3: first heat exchanger
- 4: second heat exchanger
- 5: condensation device
- 6: oleum circulating conduit
- 7: oleum circuit cooler
- 8: oleum supply conduit
- 9: oleum preheater
- 10: cooling gas supply conduit
- 11: oleum return conduit
- 12: starting gas supply conduit
- 13,13': gas supply conduit
- 14,14': coolant circulating conduit
- 15: thermal recooler

## Claims

1. A process for the condensation of sulfur trioxide from a hot starting gas containing sulfur trioxide, comprising the following steps:
a) producing a starting gas containing sulfur trioxide in an evaporator (2),
b) cooling the starting gas to a temperature of 40 to 45°C in at least one heat exchanger (3, 4), in which a gas is used as cooling medium,
c) introducing the cooled starting gas into a condensation device (5),
d) recirculating condensate obtained in the first heat exchanger (3) to the evaporator (2).
e) condensing the sulfur trioxide in the condensation device (5), in which a liquid chemically inert to sulfur trioxide is used as cooling medium, and
f) withdrawing the condensed, liquid sulfur trioxide from the condensation device (5).

2. The process as claimed in claim 1, **characterized in that** the starting gas containing sulfur trioxide is produced by heating oleum with a content of dissolved sulfur trioxide of 28 to 64 wt-% in an evaporator (2).

3. The process as claimed in claim 1 or 2, **characterized in that** cooling the starting gas in accordance with step a) is performed in two series-connected heat exchangers (3, 4).

4. The process as claimed in claim 3, **characterized in that** in the two heat exchangers (3, 4) air is used as cooling medium.

5. The process as claimed in claim 3 or 4, **characterized in that** the first heat exchanger (3) is operated countercurrently, and the cooling medium has an inlet temperature of 25 to 35°C.

6. The process as claimed in any of claims 3 to 5, **characterized in that** the starting gas is cooled in the first heat exchanger (3) to a temperature between 50 and 70°C and in the second heat exchanger (4) to a temperature between 40 and 45°C.

7. The process as claimed in any of the preceding claims, **characterized in that** condensate obtained in the second heat exchanger (4) is recirculated to the evaporator (2) or introduced into the condensation device (5).

8. The process as claimed in any of the preceding claims, **characterized in that** in the condensation device (5) a heat transfer oil is used as cooling medium.

9. The process as claimed in claim 8, **characterized in that** the heat transfer oil has a viscosity (at 30°C) between 0.1 and 100 mPa·s, preferably between 0.5 and 20 mPa·s, and particularly preferably between 1 and 1.2 mPa·s.

10. The process as claimed in claim 8 or 9, **characterized in that** the heat transfer oil consists of silicone oils.

11. The process as claimed in any of the preceding claims, **characterized in that** the condensation device (5) constitutes a shell-and-tube heat exchanger, plate-type heat exchanger or falling-film heat exchanger.

12. The process as claimed in any of the preceding claims, **characterized in that** the condensation device (5) is operated cocurrently, the cooling medium having a temperature between 25 and 30°C.

13. The process as claimed in any of claims 1 to 11, **characterized in that** the condensation device (5) is operated countercurrently, the cooling medium having a temperature between 30 and 35°C.

14. The process as claimed in any of the preceding claims, **characterized in that** the cooling medium of the condensation device (5) is circulated and upon discharge from the condensation device (5) is recooled in a liquid-liquid heat exchanger (15), before it is again introduced into the condensation device (5).

15. A plant for the condensation of sulfur trioxide from a hot starting gas containing sulfur trioxide, according to the process as claimed in any of claims 1 to 14, comprising:
a) an evaporator (2) for producing a starting gas containing sulfur trioxide,
b) a first heat exchanger (3) comprising supply and discharge conduits for coolant and starting gas containing sulfur trioxide, in which a gas, preferably air, is provided as cooling medium,
c) a condensation device (5), in which a liquid chemically inert to sulfur trioxide is provided as cooling medium, wherein said first heat exchanger (3) is provided upstream of said condensation device (5), and
d) a conduit for recirculating condensate from the first heat exchanger (3) to the evaporator (2).

16. A plant as claimed in claim 15, **characterized by** a second heat exchanger (4) comprising supply and discharge conduits for coolant and starting gas containing sulfur trioxide, in which a gas, preferably air, is provided as cooling medium, wherein said second heat exchanger (4) is provided between said first heat exchanger (3) and said condensation device (5).

17. A plant as claimed in claim 16, **characterized by** a conduit for recirculating condensate from the second heat exchanger (4) to the evaporator (2).

## Patentansprüche

1. Verfahren zur Kondensation von Schwefeltrioxid aus einem heißen, Schwefeltrioxid enthaltenden Ausgangsgas umfassend die Schritte:
a) Erzeugen des Schwefeltrioxid enthaltenden Ausgangsgases in einem Verdampfer (2)
b) Abkühlen des Ausgangsgases auf eine Temperatur von 40 bis 45°C in wenigstens einem Wärmeaustauscher (3, 4), in dem als Kühlmedium ein Gas eingesetzt wird,
c) Einleiten des abgekühlten Ausgangsgases in eine Kondensationsvorrichtung (5),
d) Rückführen des in dem ersten Wärmetauscher (3) anfallenden Kondensats in den Verdampfer (2)
e) Kondensation des Schwefeltrioxids in der Kondensationsvorrichtung (5), in der als Kühlmedium eine gegenüber Schwefeltrioxid chemisch inerte Flüssigkeit eingesetzt wird, und
f) Abziehen des kondensierten, flüssigen Schwefeltrioxids aus der Kondensationsvorrichtung (5).

2. Verfahren nach Anspruch 1, **dadurch gekennzeichnet, dass** das Schwefeltrioxid enthaltende Ausgangsgas durch Erhitzen von Oleum mit einem Gehalt an darin gelöstem Schwefeltrioxid von 28 bis 64 Gew.-% in einem Verdampfer (2) erzeugt wird.

3. Verfahren nach Anspruch 1 oder 2, **dadurch gekennzeichnet, dass** das Abkühlen des Ausgangsgases gemäß Schritt a) in zwei nacheinander geschalteten Wärmeaustauschern (3, 4) durchgeführt wird.

4. Verfahren nach Anspruch 3, **dadurch gekennzeichnet, dass** in den beiden Wärmeaustauschern (3, 4) als Kühlmedium Luft eingesetzt wird.

5. Verfahren nach Anspruch 3 oder 4, **dadurch gekennzeichnet, dass** der erste Wärmeaustauscher (3) im Gegenstrom betrieben wird und das Kühlmedium eine Eintrittstemperatur von 25 bis 35 °C aufweist.

6. Verfahren nach einem der Ansprüche 3 bis 5, **dadurch gekennzeichnet, dass** das Ausgangsgas in dem ersten Wärmeaustauscher (3) auf eine Temperatur zwischen 50 und 70°C und in dem zweiten Wärmeaustauscher (4) auf eine Temperatur zwischen 40 und 45°C abgekühlt wird.

7. Verfahren nach einem der vorhergehenden Ansprüche, **dadurch gekennzeichnet, dass** in dem zweiten Wärmeaustauscher (4) anfallendes Kondensat in den Verdampfer (2) zurückgeführt oder in die Kondensationsvorrichtung (5) geführt wird.

8. Verfahren nach einem der vorhergehenden Ansprüche, **dadurch gekennzeichnet, dass** in der Kondensationsvorrichtung (5) als Kühlmedium ein Wärmeträgeröl eingesetzt wird.

9. Verfahren nach Anspruch 8, **dadurch gekennzeichnet, dass** das Wärmeträgeröl eine Viskosität (bei 30°C) zwischen 0,1 und 100 mPa·s, bevorzugt zwischen 0,5 und 20 mPa·s und besonders bevorzugt zwischen 1 und 1,2 mPa·s aufweist.

10. Verfahren nach Anspruch 8 oder 9, **dadurch gekennzeichnet, dass** das Wärmeträgeröl aus Silikonölen besteht.

11. Verfahren nach einem der vorhergehenden Ansprüche, **dadurch gekennzeichnet, dass** die Kondensationsvorrichtung (5) als Rohrbündel-, Platten- oder Fallfilmwärmeaustauscher ausgebildet ist.

12. Verfahren nach einem der vorhergehenden Ansprüche, **dadurch gekennzeichnet, dass** die Kondensationsvorrichtung (5) im Gleichstrom betrieben wird, wobei das Kühlmedium eine Temperatur zwischen 25 und 30 °C aufweist.

13. Verfahren nach einem der Ansprüche 1 bis 11, **dadurch gekennzeichnet, dass** die Kondensationsvorrichtung (5) im Gegenstrom betrieben wird, wobei das Kühlmedium eine Temperatur zwischen 30 und 35 °C aufweist.

14. Verfahren nach einem der vorhergehenden Ansprüche, **dadurch gekennzeichnet, dass** das Kühlmedium der Kondensationsvorrichtung (5) im Kreislauf geführt wird und nach dem Austritt aus der Kondensationsvorrichtung (5) in einem Flüssigkeits-/Flüssigkeits-Wärmeaustauscher (15) zurückgekühlt wird, bevor es erneut in die Kondensationsvorrichtung (5) geleitet wird.

15. Anlage zur Kondensation von Schwefeltrioxid aus einem heißen, Schwefeltrioxid enthaltenden Ausgangsgas gemäß einem Verfahren nach einem der Ansprüche 1 bis 14, umfassend:
a) einen Verdampfer (2) zur Erzeugung eines schwefeltrioxidreichen Ausgangsgases,
b) einen ersten Wärmeaustauscher (3) mit Zufuhr- und Abfuhrleitungen für Kühlmittel und schwefeltrioxidhaltiges Ausgangsgas, in dem als Kühlmedium ein Gas, vorzugsweise Luft, vorgesehen ist,
c) eine Kondensationsvorrichtung (5), in der als Kühlmedium eine gegenüber Schwefeltrioxid chemisch inerte Flüssigkeit vorgesehen ist, wobei der erste Wärmeaustauscher (3) stromaufwärts der Kondensationsvorrichtung (5) vorgesehen ist, und
d) eine Leitung zur eine zur Rückführung von Kondensat aus dem ersten Wärmetauscher (3) in den Verdampfer (2).

16. Anlage nach Anspruch 15, **gekennzeichnet durch** einen zweiten Wärmeaustauscher (4) mit Zufuhr- und Abfuhrleitungen für Kühlmittel und schwefeltrioxidhaltiges Ausgangsgas, in dem als Kühlmedium ein Gas, vorzugsweise Luft, vorgesehen ist, wobei der zweite Wärmeaustauscher (4) zwischen dem ersten Wärmeaustauscher (3) und der Kondensationsvorrichtung (5) vorgesehen ist.

17. Anlage nach Anspruch 16, **gekennzeichnet durch** eine Leitung zur eine zur Rückführung von Kondensat aus dem zweiten Wärmetauscher (4) in den Verdampfer (2).

## Revendications

1. Procédé de condensation de trioxyde de soufre à partir d'un gaz d'amorçage chaud contenant du trioxyde de soufre, comprenant les étapes suivantes :
a) la production d'un gaz d'amorçage contenant du trioxyde de soufre dans un évaporateur (2),
b) le refroidissement du gaz d'amorçage à une température de 40 à 45 °C dans au moins un échangeur thermique (3, 4), dans lequel un gaz est utilisé comme milieu de refroidissement,
c) l'introduction du gaz d'amorçage refroidi dans un dispositif de condensation (5),
d) le renvoi du trioxyde de soufre vers le dispositif de condensation (5), dans lequel un liquide chimiquement inerte au trioxyde de soufre est utilisé comme milieu de refroidissement, et
f) le retrait du trioxyde de soufre liquide condensé du dispositif de condensation (5).

2. Procédé tel que revendiqué dans la revendication 1, **caractérisé en ce que** le gaz d'amorçage contenant le trioxyde de soufre est produit en chauffant l'oléum avec une teneur en trioxyde de soufre dissous de 28 à 64 % en masse dans un évaporateur (2).

3. Procédé tel que revendiqué dans la revendication 1 ou 2, **caractérisé en ce que** le refroidissement du gaz d'amorçage conformément à l'étape a) est effectué dans deux échangeurs thermiques raccordés en série (3, 4).

4. Procédé tel que revendiqué dans la revendication 3, **caractérisé en ce que** dans les deux échangeurs (3, 4), de l'air est utilisé comme milieu de refroidissement.

5. Procédé tel que revendiqué dans la revendication 3 ou 4, **caractérisé en ce que** le premier échangeur thermique (3) fonctionne à contre-courant, et le milieu de refroidissement a une température d'entrée de 25 à 35 °C.

6. Procédé tel que revendiqué dans l'une quelconque des revendications 3 à 5, **caractérisé en ce que** le gaz d'amorçage est refroidi dans le premier échangeur thermique (3) à une température comprise entre 50 et 70 °C et dans le deuxième échangeur thermique (4) à une température comprise entre 40 et 45 °C.

7. Procédé tel que revendiqué dans l'une quelconque des revendications précédentes, **caractérisé en ce que** le condensat obtenu dans le deuxième échangeur thermique (4) est renvoyé vers l'évaporateur (2) ou introduit dans le dispositif de condensation (5).

8. Procédé tel que revendiqué dans l'une quelconque des revendications précédentes, **caractérisé en ce que** dans le dispositif de condensation (5), une huile caloporteuse est utilisée comme milieu de refroidissement.

9. Procédé tel que revendiqué dans la revendication 8, **caractérisé en ce que** l'huile caloporteuse a une viscosité (à 30 °C) comprise entre 0,1 et 100 mPa·s, de préférence entre 0,5 et 20 mPa·s, et de manière particulièrement préférée entre 1 et 1,2 mPa·s.

10. Procédé tel que revendiqué dans la revendication 8 ou 9, **caractérisé en ce que** l'huile caloporteuse est constituée d'huiles de silicone.

11. Procédé tel que revendiqué dans l'une quelconque des revendications précédentes, **caractérisé en ce que** le dispositif de condensation (5) constitue un échangeur thermique à calandre, un échangeur thermique à plaque ou un échangeur thermique à couches minces.

12. Procédé tel que revendiqué dans l'une quelconque des revendications précédentes, **caractérisé en ce que** le dispositif de condensation (5) fonctionne à contre-courant, le milieu de refroidissement ayant une température comprise entre 25 et 30 °C.

13. Procédé tel que revendiqué dans l'une quelconque des revendications 1 à 11, **caractérisé en ce que** le dispositif de condensation (5) fonctionne à contre-courant, le milieu de refroidissement ayant une température comprise entre 30 et 35 °C.

14. Procédé tel que revendiqué dans l'une quelconque des revendications précédentes, **caractérisé en ce que** le milieu de refroidissement du dispositif de condensation (5) est envoyé et, lorsqu'il est évacué du dispositif de condensation (5), est refroidi dans un échangeur thermique liquide/liquide (15), avant d'être à nouveau introduit dans le dispositif de condensation (5).

15. Matériel de condensation de trioxyde de soufre à partir d'un gaz d'amorçage chaud contenant du trioxyde de soufre, selon le procédé revendiqué dans l'une quelconque des revendications 1 à 14, comprenant :
a) un évaporateur (2) pour produire un gaz d'amorçage contenant du trioxyde de soufre ;
b) un premier échangeur thermique (3) comprenant des conduits d'alimentation et d'évacuation pour le gaz réfrigérant et d'amorçage contenant du trioxyde de soufre, dans lequel un gaz, de préférence l'air, est fourni sous forme de milieu de refroidissement,
c) un dispositif de condensation (5), dans lequel un liquide chimiquement inerte au trioxyde de soufre (3) est fourni en amont dudit dispositif de condensation (5), et
d) un conduit pour renvoyer le condensat provenant du premier échangeur thermique (3) vers l'évaporateur (2).

16. Matériel tel que revendiqué dans la revendication 15, **caractérisé par** un deuxième échangeur thermique (4) comprenant des conduits d'alimentation et d'évacuation pour le gaz réfrigérant et d'amorçage contenant du trioxyde de soufre, dans lequel un gaz, de préférence l'air, est fourni sous forme de milieu de refroidissement, dans lequel ledit deuxième échangeur thermique (4) est fourni entre ledit premier échangeur thermqiue (3) et ledit dispositif de condensation (5).

17. Matériel tel que revendiqué dans la revendication 16, **caractérisé par** un conduit pour renvoyer le condensat provenant du deuxième échangeur thermique (4) vers l'évaporateur (2).
